# EUROPEAN PATENT APPLICATION

(11) **EP 2 902 868 A1**
(43) Date of publication of application: **05.08.2015**
(21) Application number: 15151667.1
(22) Date of filing: 19.01.2015
(51) Int. Cl.: G06F 1/16, G06F 3/01, G06F 3/0346, G06F 3/0481

(54) **Operational methods and systems for motion-centric user interfaces**

(30) Priority: 29.01.2014 TW 103103445
(71) Applicant: Noodoe Corporation, Taipei City 115 (TW)
(72) Inventor: Wang, John C., 115 Taipei City (TW)
(74) Representative: Karakatsanis, Georgios

(57) **Abstract**

Operational methods and systems for motion-centric user interfaces (100) are provided. First, at least one user interface (600) is provided. A motion of an electronic device (PD) is detected by at least one sensor (110). When the motion indicates that the electronic device (PD) substantially rotates in a first direction (FRD) around a specific axis (SA), a switch from a first item (610) to a second item (620) in the user interface (600) is performed. The first item (610) and the second item (620) correspond either to different applications, or respectively correspond to an inactivation function and an activation function of an application.

## Description

### BACKGROUND

### Technical Field

The disclosure relates generally to operational methods and systems for motion-centric user interfaces, and, more particularly to methods and systems that can operate user interfaces based on motion of an electronic device.

### Description of the Related Art

Recently, portable devices, such as smart phones, notebooks, wearable devices, or other portable devices, have become more and more technically advanced and multifunctional. For example, a portable device may have network connecting capabilities. Users can use their portable devices to connect to networks anytime and anywhere. For the convenience and newly functionalities advanced by modern technology, these devices have become necessities of life.

Generally, various user interfaces can be provided in a portable device for operating corresponding functions and applications in that device. Typically, a portable device can have at least one input tool, such as a physical button or a touch-sensitive screen. Users can use their fingers to input commands to the device via the physical button or the touch-sensitive screen to operate the user interfaces.

The technology of operating devices in a touch manner has indeed changed the human behavior of operating electronic devices, and has brought forward remarkable benefits. However, for some users, touch input still has a lot of drawbacks and limitations. For example, an electronic device may execute unexpected processes due to unintentional touches by a user who either does not know the operations of the electronic device or lacks the dexterity to avoid mistouches. As time passes, with more mistouches occurring, the aspiration of using these devices will be reduced. Another aspect in which touch devices fall short deals with safety. In particular for drivers, it is inconvenient and dangerous to operate an electronic device via a touch manner while driving. Consequently, providing more intuitive and convenient user interfaces and related operational methods is an important topic which the industry is expected to solve. New, safer, more intuitive and convenient user interfaces are also highly sought after by most users.

### SUMMARY

Operational methods and systems for motion-centric user interfaces are provided, wherein user interfaces can be operated based on motion of an electronic device.

In an embodiment of an operational method for motion-centric user interfaces, at least one user interface is provided. A motion of an electronic device is detected by at least one sensor. When the motion indicates that the electronic device substantially rotates in a first direction around a specific axis, a switch from a first item to a second item in the user interface is performed.

An embodiment of an operational system for motion-centric user interfaces comprises a storage unit, at least one sensor, and a processing unit. The storage unit comprises at least one user interface. The sensor detects a motion of an electronic device. The processing unit determines whether the motion indicates that the electronic device substantially rotates in a first direction around a specific axis. When the motion indicates that the electronic device substantially rotates in a first direction around a specific axis, the processing unit performs a switch from a first item to a second item in the user interface.

In some embodiments, the first item and the second item correspond to different applications, or respectively correspond to an inactivation function and an activation function of an application.

In some embodiments, the user interface can be displayed in a display unit of the electronic device, wherein the user interface comprises an indication. When the motion indicates that the electronic device substantially rotates in the first direction around the specific axis, the indication is moved from the position of the first item to the position of the second item.

In some embodiments, a movement velocity corresponding to the indication is determined according to a rotation velocity corresponding to the rotation of the electronic device.

In some embodiments, after the indication is moved to the position of the second item, the indication is gradually moved to the position of the first item. In some embodiments, a time setting is received, wherein the time setting determines a time interval in which the indication is moved from the position of the second item to the position of the first item. In some embodiments, a selection corresponding to at least one of a plurality of candidate applications is received, wherein each candidate application has a predefined time setting. The time setting is set according to the predefined time setting corresponding to the selected candidate application.

In some embodiments, when the motion indicates that the electronic device substantially rotates in a second direction around the specific axis, a switch from the second item to the first item is performed, wherein the first direction and the second direction are different.

In some embodiments, a variation of a velocity and a displacement generated in a predefined interval in which at least one sensor detects the motion is received. It is determined whether the variation of the velocity and the displacement in the predefined interval conforms to a specific pattern. When the variation of the velocity and the displacement in the predefined interval conforms to the specific pattern, a switch from a first user interface to a second user interface is performed. In some embodiments, a variation of angular acceleration generated in the predefined interval in which at least one sensor detects the motion is received. It is determined whether the variation of the angular acceleration, the velocity and the displacement in the predefined interval conforms to the specific pattern. When the variation of the angular acceleration, the velocity and the displacement in the predefined interval conforms to the specific pattern, a switch from a first user interface to a second user interface is performed. In some embodiments, the specific pattern indicates an arm-flinging behavior.

In some embodiments, it is determined whether an acceleration for activating the rotation is greater than a predefined acceleration. When the acceleration for activating the rotation is greater than the predefined acceleration, the switch from the first item to the second item in the user interface is performed.

In some embodiments, it is determined whether a rotation angle corresponding to the rotation is greater than a predefined angle. When the rotation angle is greater than the predefined angle, the switch from the first item to the second item in the user interface is performed.

In an embodiment of an operational method for motion-centric user interfaces, a first user interface and a second user interface are provided. A motion of an electronic device is detected by at least one sensor, and a variation of a velocity and a displacement generated in a predefined interval in which the sensor detects the motion is obtained. It is determined whether the variation of the velocity and the displacement in the predefined interval conforms to a specific pattern. When the variation of the velocity and the displacement in the predefined interval conforms to the specific pattern, a switch from a first user interface to a second user interface is performed.

An embodiment of an operational system for motion-centric user interfaces comprises a storage unit, at least one sensor, and a processing unit. The storage unit at least comprises a first user interface and a second user interface. The sensor detects a motion of an electronic device. The processing unit obtains a variation of a velocity and a displacement generated in a predefined interval in which the sensor detects the motion, and determines whether the variation of the velocity and the displacement in the predefined interval conforms to a specific pattern. When the variation of the velocity and the displacement in the predefined interval conforms to the specific pattern, the processing unit performs a switch from the first user interface to the second user interface.

In an embodiment of an operational method for motion-centric user interfaces, at least one user interface is provided. A motion of an electronic device is detected by at least one sensor. When the motion indicates that the electronic device substantially rotates in a first direction around a specific axis, an application corresponding to the user interface is activated.

An embodiment of an operational system for motion-centric user interfaces comprises a storage unit, at least one sensor, and a processing unit. The storage unit at least comprises a user interface. The sensor detects a motion of an electronic device. The processing unit determines whether the motion indicates that the electronic device substantially rotates in a first direction around a specific axis. When the motion indicates that the electronic device substantially rotates in a first direction around a specific axis, the processing unit activates an application corresponding to the user interface.

Operational methods for motion-centric user interfaces may take the form of a program code embodied in a tangible media. When the program code is loaded into and executed by a machine, the machine becomes an apparatus for practicing the disclosed method.

### BRIEF DESCRIPTION OF THE DRAWINGS

The invention will become more fully understood by referring to the following detailed description with reference to the accompanying drawings, wherein:
Fig. 1 is a schematic diagram illustrating an embodiment of an operational system for motion-centric user interfaces of the invention;
Fig. 2 is a flowchart of an embodiment of an operational method for motion-centric user interfaces of the invention;
Fig. 3 is a flowchart of another embodiment of an operational method for motion-centric user interfaces of the invention;
Fig. 4 is a flowchart of another embodiment of an operational method for motion-centric user interfaces of the invention;
Fig. 5 is a schematic diagram illustrating an example of an electronic device rotating around a specific axis;
Figs. 6A∼6C are schematic diagrams illustrating an embodiment of an operational example for user interfaces of the invention;
Fig. 7 is a flowchart of an embodiment of a method for determining a time setting of the invention;
Fig. 8 is a flowchart of another embodiment of an operational method for motion-centric user interfaces of the invention; and
Fig. 9 is a flowchart of another embodiment of an operational method for motion-centric user interfaces of the invention.

### DETAILED DESCRIPTION OF THE INVENTION

Operational methods and systems for motion-centric user interfaces are provided.

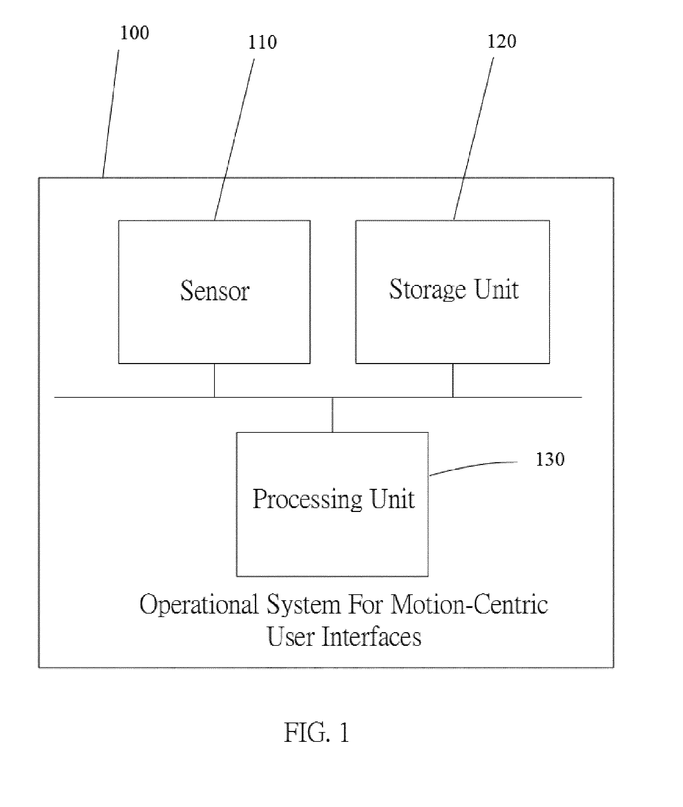

Fig. 1 is a schematic diagram illustrating an embodiment of an operational system for motion-centric user interfaces of the invention. As shown in Fig.1, the operational system for motion-centric user interfaces 100 can be used in an electronic device. In some embodiments, the electronic device may be a portable device, such as a mobile phone, a smart phone, a PDA (Personal Digital Assistant), a GPS (Global Positioning System), a notebook, a tablet computer, or a wearable device.

The operational system for motion-centric user interfaces 100 comprises at least one sensor 110, a storage unit 120, and a processing unit 130. The sensor 110 can detect a motion of an electronic device. In some embodiments, the sensor 110 may be an accelerometer such as a G-sensor for generating information of velocity and displacement when the electronic device moves. In some embodiments, the sensor 110 may be a Gyro sensor for generating information of angular acceleration when the electronic device moves. It is noted that, the above sensors are only examples of the present invention, and the present invention is not limited thereto. Any sensor which can detect the motion of an electronic device can be applied in the present invention. The storage unit 120 can store related data, such as data output by the sensor 110, applications provided by the electronic device, and related user interfaces. The processing unit 130 can control related operations of hardware and software in the electronic device, and perform the operational methods for motion-centric user interfaces of the invention, which will be discussed later. It is understood that, in some embodiments, the operational system for motion-centric user interfaces 100 can further comprise a display unit (not shown in Fig. 1) for displaying related information, such as images, interfaces, and/or related data.

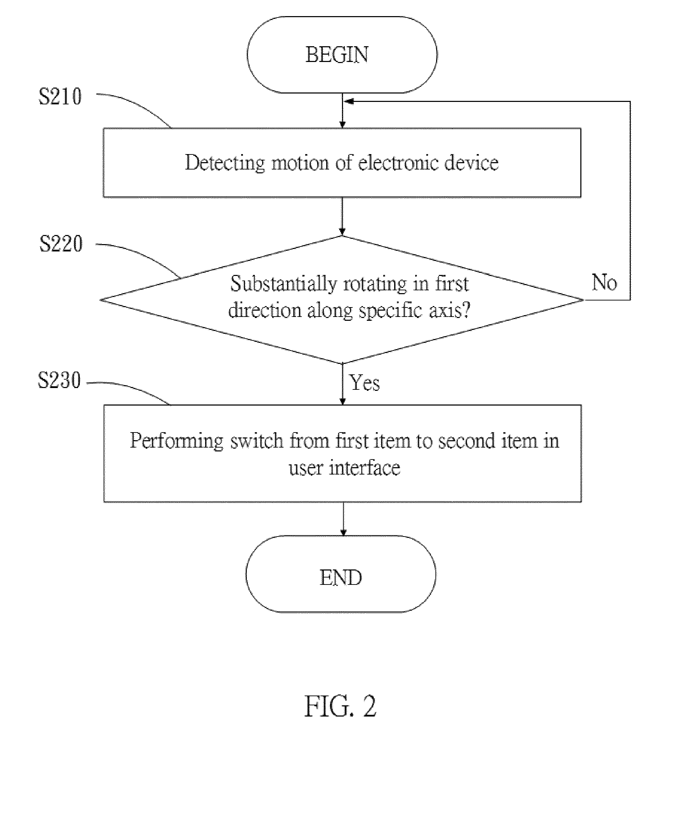

Fig. 2 is a flowchart of an embodiment of an operational method for motion-centric user interfaces of the invention. The operational method for motion-centric user interfaces of the invention can be used in an electronic device, such as a mobile phone, a smart phone, a PDA, a GPS, a notebook, a tablet computer, a wearable device, or other portable devices.

In step S210, a motion of an electronic device is detected by at least one sensor. It is understood that, in some embodiments, the sensor may be an accelerometer for generating information of velocity and displacement when the electronic device moves. In some embodiments, the sensor may be a Gyro sensor for generating information of angular acceleration when the electronic device moves. It is noted that, the above sensors are only examples of the present invention, and the present invention is not limited thereto. Any sensor which can detect the motion of an electronic device can be applied in the present invention. In step S220, it is determined whether the motion indicates that the electronic device substantially rotates in a first direction such as a counterclockwise direction around a specific axis. If the motion does not indicate that the electronic device substantially rotates in a first direction around a specific axis (No in step S220), the procedure returns to step S210. If the motion indicates that the electronic device substantially rotates in a first direction around a specific axis (Yes in step S220), in step S230, a switch from a first item to a second item in a user interface is performed.

It is understood that, in some embodiments, the first item and the second item can correspond to different applications. In some embodiments, after the second item is switched to, and a predefined time, such as 2 seconds passes, an application corresponding to the second item is automatically activated. In some embodiments, after the second item is switched to, the electronic device can receive a specific instruction. After the specific instruction is received, an application corresponding to the second item is automatically activated. It is noted that, the specific instruction can be input to the electronic device in any manner. For example, the specific instruction can be input to the electronic device via a voice reception unit, a touch-sensitive screen, a motion sensor, an IR detector, and/or a physical button on the electronic device.

It is understood that, in some embodiments, it is determined whether an acceleration for activating the rotation is greater than a predefined acceleration. When the acceleration for activating the rotation is greater than the predefined acceleration, the switch from the first item to the second item in the user interface is performed. Additionally, in some embodiments, it is determined whether a rotation angle corresponding to the rotation is greater than a predefined angle. When the rotation angle is greater than the predefined angle, the switch from the first item to the second item in the user interface is performed. The accuracy in switch between items can be improved by using above determinations.

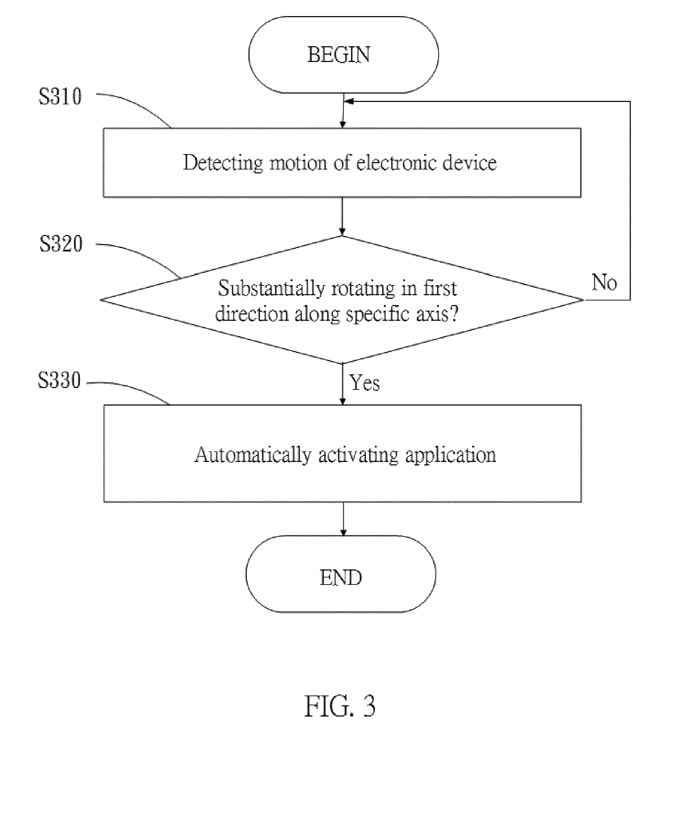

Additionally, in some embodiments, the first item and the second item can respectively correspond to an inactivation function and an activation function of an application. Fig. 3 is a flowchart of another embodiment of an operational method for motion-centric user interfaces of the invention. The operational method for motion-centric user interfaces of the invention can be used in an electronic device, such as a mobile phone, a smart phone, a PDA, a GPS, a notebook, a tablet computer, a wearable device, or other portable devices.

In step S310, a motion of an electronic device is detected by at least one sensor. In some embodiments, the sensor may be an accelerometer for generating information of velocity and displacement when the electronic device moves. In some embodiments, the sensor may be a Gyro sensor for generating information of angular acceleration when the electronic device moves. It is noted that, the above sensors are only examples of the present invention, and the present invention is not limited thereto. Any sensor which can detect the motion of an electronic device can be applied in the present invention. In step S320, it is determined whether the motion indicates that the electronic device substantially rotates in a first direction such as a counterclockwise direction around a specific axis. If the motion does not indicate that the electronic device substantially rotates in a first direction around a specific axis (No in step S320), the procedure returns to step S310. If the motion indicates that the electronic device substantially rotates in a first direction around a specific axis (Yes in step S320), in step S330, an application is automatically activated.

Similarly, in some embodiments, it is determined whether an acceleration for activating the rotation is greater than a predefined acceleration. When the acceleration for activating the rotation is greater than the predefined acceleration, the application is automatically activated. Additionally, in some embodiments, it is determined whether a rotation angle corresponding to the rotation is greater than a predefined angle. When the rotation angle is greater than the predefined angle, the application is automatically activated.

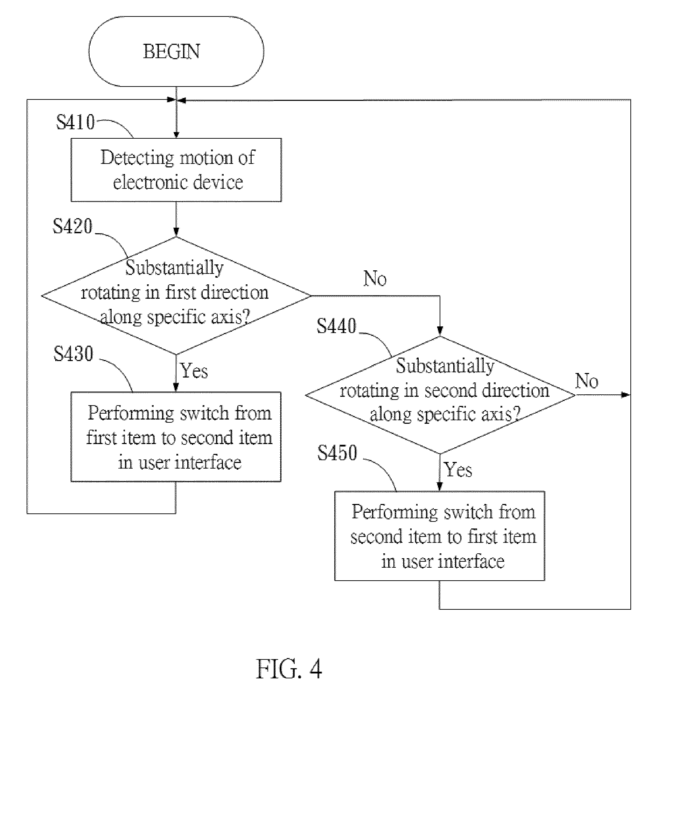

Fig. 4 is a flowchart of another embodiment of an operational method for motion-centric user interfaces of the invention. The operational method for motion-centric user interfaces of the invention can be used in an electronic device, such as a mobile phone, a smart phone, a PDA, a GPS, a notebook, a tablet computer, a wearable device, or other portable devices.

In step S410, a motion of an electronic device is detected by at least one sensor. Similarly, in some embodiments, the sensor may be an accelerometer for generating information of velocity and displacement when the electronic device moves. In some embodiments, the sensor may be a Gyro sensor for generating information of angular acceleration when the electronic device moves. It is noted that, the above sensors are only examples of the present invention, and the present invention is not limited thereto. Any sensor which can detect the motion of an electronic device can be applied in the present invention. In step S420, it is determined whether the motion indicates that the electronic device substantially rotates in a first direction such as a counterclockwise direction around a specific axis. If the motion indicates that the electronic device substantially rotates in a first direction around a specific axis (Yes in step S420), in step S430, a switch from a first item to a second item in a user interface is performed. If the motion does not indicate that the electronic device substantially rotates in a first direction around a specific axis (No in step S420), in step S440, it is determined whether the motion indicates that the electronic device substantially rotates in a second direction such as a clockwise direction around the specific axis. If the motion does not indicate that the electronic device substantially rotates in a second direction around the specific axis (No in step S440), the procedure returns to step S410. If the motion indicates that the electronic device substantially rotates in a second direction around the specific axis (Yes in step S440), in step S450, a switch from the second item to the first item in the user interface is performed. Similarly, in some embodiments, the first item and the second item correspond to different applications, or respectively correspond to an inactivation function and an activation function of an application.

Similarly, in some embodiments, it is determined whether an acceleration for activating the rotation is greater than a predefined acceleration. When the acceleration for activating the rotation is greater than the predefined acceleration, the switch between items is performed. Additionally, in some embodiments, it is determined whether a rotation angle corresponding to the rotation is greater than a predefined angle. When the rotation angle is greater than the predefined angle, the switch between items is performed.

It is understood that, in some embodiments, the distance between the first item and the second item can be determined according to the rotation angle corresponding to the rotation of the electronic device and a movement factor. For example, when the movement factor is 2, and the rotation angle corresponding to the rotation of the electronic device is 10 degrees, the distance between the first item and the second item is a distance corresponding to 20 degrees. In some examples, other items may be existed between the first item and the second item, and these items are skipped.

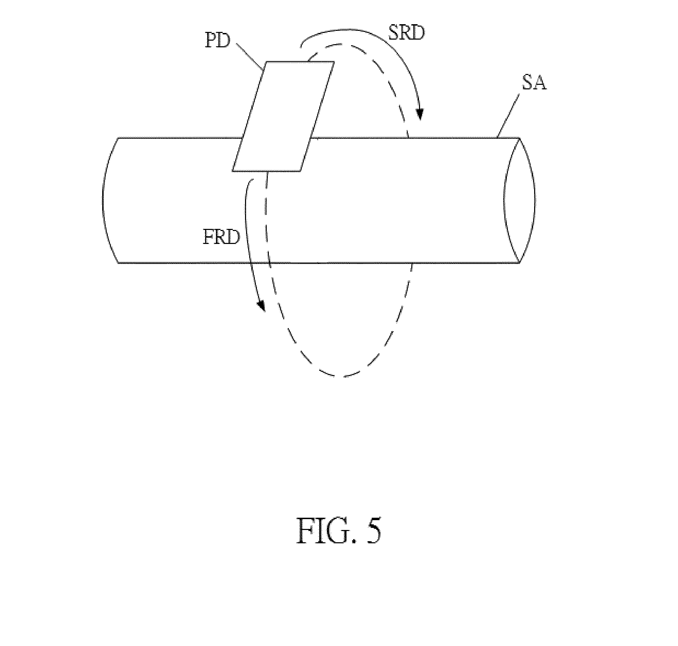

Fig. 5 is a schematic diagram illustrating an example of an electronic device rotating around a specific axis. As shown in Fig. 5, an electronic device PD can rotate in a first direction FRD such as a counterclockwise direction or in a second direction SRD such as a clockwise direction around a specific axis SA. For example, the electronic device PD may be a wearable device worn on the arm of a user. It is understood that, the arm of the user may be the above specific axis. The user can twist the forearm to cause the electronic device to rotate clockwise or counterclockwise along with the forearm.

It is noted that, in some embodiments, the electronic device can have a display unit for displaying user interfaces, applications corresponding to respective user interfaces, and/or related items. In some embodiments, the user interface can comprise an indication. When the motion indicates that the electronic device substantially rotates in the first direction around the specific axis, the indication is moved from the position of the first item to the position of the second item. As described, in some embodiments, when the first item and the second item respectively correspond to different applications, the indication represents an application being currently selected. In some embodiments, when the first item and the second item respectively correspond to an inactivation function and an activation function of an application, the indication represents a current state, such as inactivation or activation of an application.

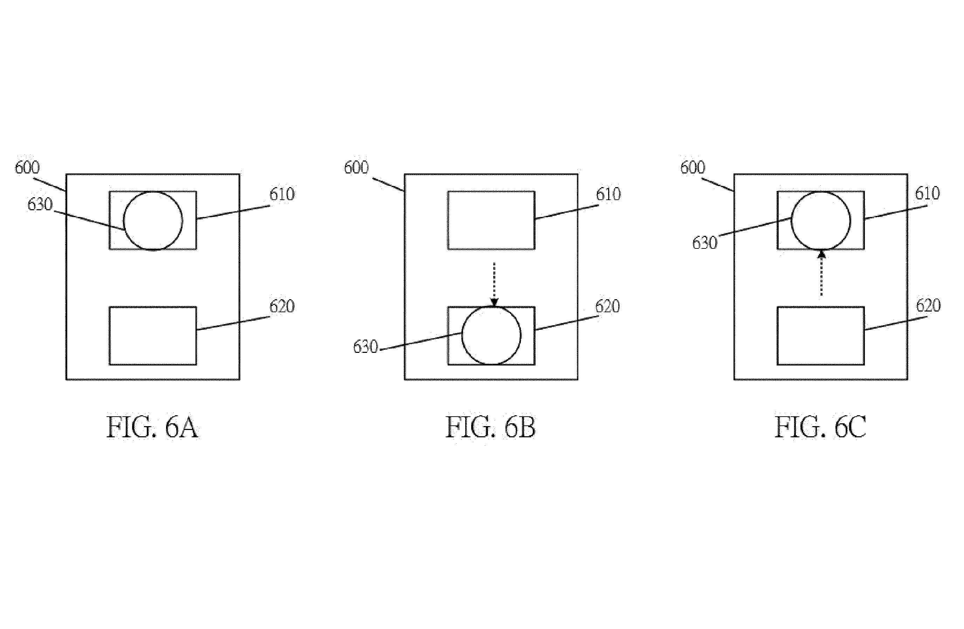

Figs. 6A∼6C are schematic diagrams illustrating an embodiment of an operational example for motion-centric user interfaces of the invention. As shown in Fig. 6A, a user interface 600 includes a first item 610, a second item 620, and an indication 630, wherein the indication 630 is first at the position of the first item 610. When the electronic device substantially rotates in a first direction around a specific axis, the indication 630 is moved from the position of the first item 610 to the position of the second item 620, as shown in Fig. 6B. It is understood that, in some embodiments, a movement velocity corresponding to the indication can be determined according to a rotation velocity corresponding to the rotation of the electronic device. Thereafter, when the electronic device substantially rotates in a second direction around the specific axis, the indication 630 is moved from the position of the second item 620 to the position of the first item 610, as shown in Fig. 6C.

In some embodiments, when the first item and the second item respectively correspond to an inactivation function and an activation function of an application, after the indication is moved from the position of the first item to the position of the second item, the indication can be gradually moved to the position of the first item. In some embodiments, the electronic device can provide a user interface for receiving a time setting, wherein the time setting determines a time interval in which the indication is moved from the position of the second item to the position of the first item.

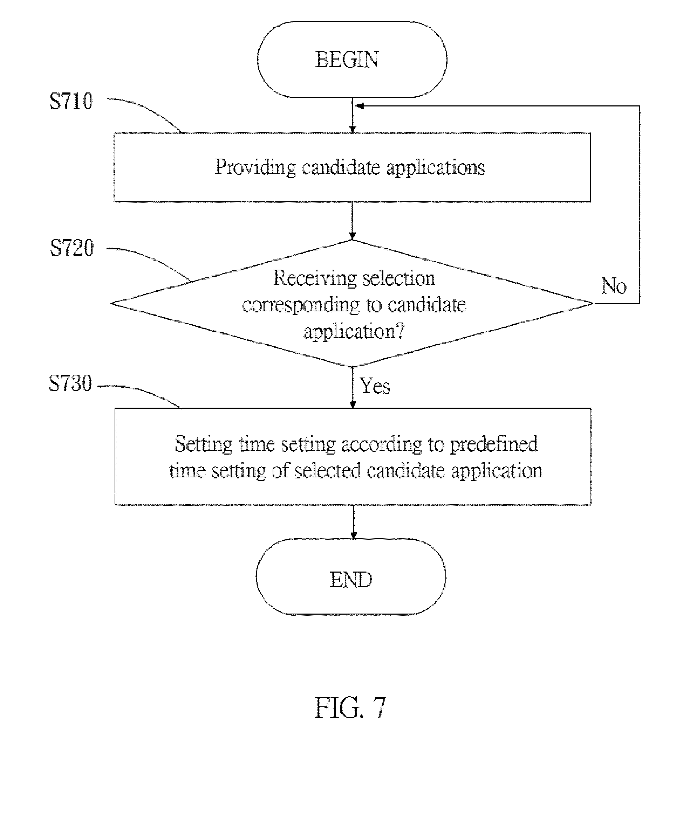

Fig. 7 is a flowchart of an embodiment of a method for determining a time setting of the invention. In step S710, a plurality of candidate applications are provided, wherein each candidate application has a predefined time setting. For example, an application of a washer reminder can be a candidate application, and the corresponding predefined time setting may be 50 minutes. Additionally, an application of a rest reminder can be another candidate application, and the corresponding predefined time setting may be 20 minutes. In step S720, it is determined whether a selection corresponding to one of the candidate applications is received. It is understood that, in some embodiments, each candidate application may have a corresponding icon, and the icon is displayed in the display unit of the electronic device. Users can select one of the icons corresponding to the candidate applications in any manner. For example, one of the icons can be selected via a voice reception unit, a touch-sensitive screen, a motion sensor, an IR detector, and/or a physical button on the electronic device. It is noted that, in some embodiments, users can select one of the candidate applications according to the embodiments in Fig. 2 or Fig. 4. If no selection corresponding to one of the candidate applications is received (No in step S720), the procedure returns to step S710. If a selection corresponding to one of the candidate applications is received (Yes in step S720), in step S730, the time setting is set according to the predefined time setting corresponding to the selected candidate application. It is noted that, users can simply and intuitively select icons, and related setting processes can be automatically completed, thereby saving techniques and time needed for operating related interfaces.

As described, after the indication is moved from the position of the first item to the position of the second item, the indication can gradually move to the position of the first item. It is noted that, in some embodiments, the moving process of the indication can be displayed in the display unit of the electronic device in its entirety. However, in some embodiments, the moving process of the indication can be partially displayed in the display unit of the electronic device. For example, the beginning and the end of the moving process of the indication can be displayed.

It is understood that, in some embodiments, the electronic device can have at least one user interface. For example, each user interface can display different applications and widgets. A switch between user interfaces can be performed according to the motion of the electronic device.

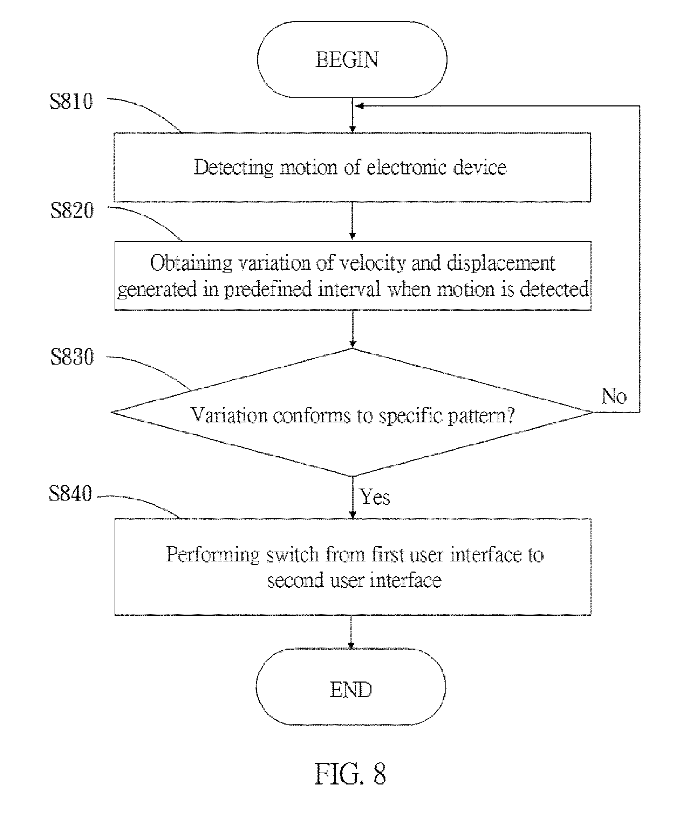

Fig. 8 is a flowchart of another embodiment of an operational method for motion-centric user interfaces of the invention. The operational method for motion-centric user interfaces of the invention can be used in an electronic device, such as a mobile phone, a smart phone, a PDA, a GPS, a notebook, a tablet computer, a wearable device, or other portable devices.

In step S810, a motion of an electronic device is detected by at least one sensor. In some embodiments, the sensor may be an accelerometer for generating information of velocity and displacement when the electronic device moves. In some embodiments, the sensor may be a Gyro sensor for generating information of angular acceleration when the electronic device moves. It is noted that, the above sensors are only examples of the present invention, and the present invention is not limited thereto. Any sensor which can detect the motion of an electronic device can be applied in the present invention. In step S820, a variation of a velocity and a displacement generated by the sensor, in a predefined interval in which the sensor detects the motion, is obtained. In step S830, it is determined whether the variation of the velocity and the displacement in the predefined interval conforms to a specific pattern. It is noted that, the specific pattern can be predefined in the electronic device. In some embodiments, a tolerance range can also be defined for the specific pattern. In other words, when the variation of the velocity and the displacement in the predefined interval does not exactly conform to a specific pattern, and the difference between the variation and the specific pattern falls into the tolerance range, it is determined the variation of the velocity and the displacement in the predefined interval conforms to the specific pattern. It is understood that, in some embodiments, the specific pattern indicates an arm-flinging behavior. If the variation of the velocity and the displacement in the predefined interval does not conform to a specific pattern (No in step S830), the procedure returns to step S810. If the variation of the velocity and the displacement in the predefined interval conforms to a specific pattern (Yes in step S830), in step S840, a switch from a first user interface to a second user interface is performed.

As described, in some embodiments, the sensor may be a Gyro sensor for generating information of angular acceleration when the electronic device moves. In some embodiments, a variation of the angular acceleration generated in the predefined interval in which the sensor detects the motion is received. It is determined whether the variation of the angular acceleration, the velocity and the displacement in the predefined interval conforms to the specific pattern. When the variation of the angular acceleration, the velocity and the displacement in the predefined interval conforms to the specific pattern, a switch from a first user interface to a second user interface is performed.

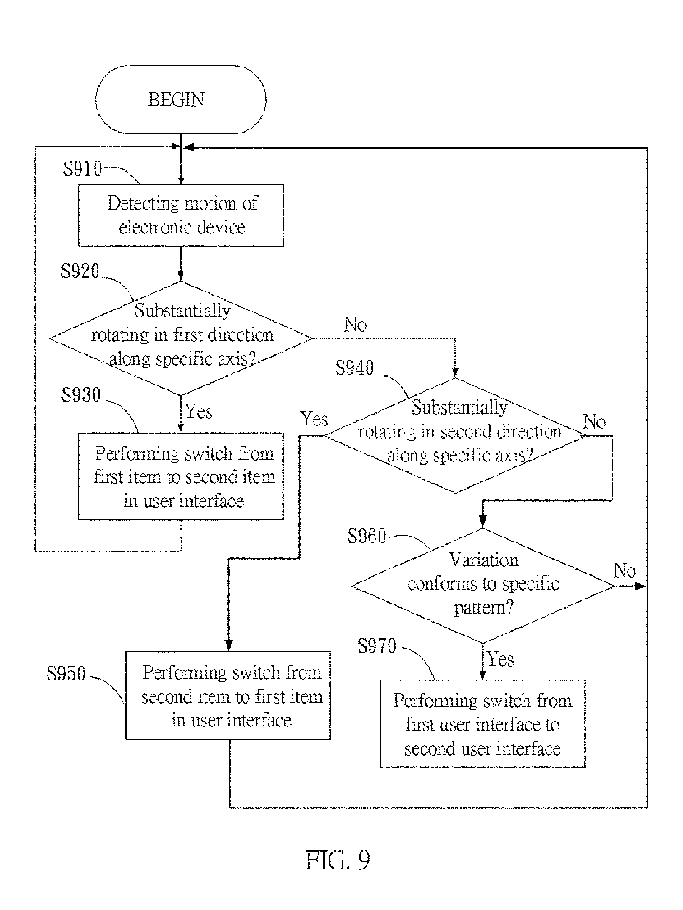

Fig. 9 is a flowchart of another embodiment of an operational method for motion-centric user interfaces of the invention. The operational method for motion-centric user interfaces of the invention can be used in an electronic device, such as a mobile phone, a smart phone, a PDA, a GPS, a notebook, a tablet computer, a wearable device, or other portable devices. In the embodiment, the electronic devices can have a plurality of user interfaces and each user interface can selectively comprise at least one item or at least one application.

In step S910, a motion of an electronic device is detected by at least one sensor. In some embodiments, the sensor may be an accelerometer for generating information of velocity and displacement when the electronic device moves. In some embodiments, the sensor may be a Gyro sensor for generating information of angular acceleration when the electronic device moves. It is noted that, the above sensors are only examples of the present invention, and the present invention is not limited thereto. Any sensor which can detect the motion of an electronic device can be applied in the present invention. In step S920, it is determined whether the motion indicates that the electronic device substantially rotates in a first direction such as a counterclockwise direction around a specific axis. If the motion indicates that the electronic device substantially rotates in a first direction around a specific axis (Yes in step S920), in step S930, a switch from a first item to a second item in the user interface is performed. Similarly, in some embodiments, the first item and the second item correspond to different applications, or respectively correspond to an inactivation function and an activation function of an application. If the motion does not indicate that the electronic device substantially rotates in a first direction around a specific axis (No in step S920), in step S940, it is determined whether the motion indicates that the electronic device substantially rotates in a second direction such as a clockwise direction around the specific axis. If the motion indicates that the electronic device substantially rotates in a second direction around the specific axis (Yes in step S940), in step S950, a switch from the second item to the first item in the user interface is performed. Similarly, in some embodiments, it is determined whether an acceleration for activating the rotation is greater than a predefined acceleration. When the acceleration for activating the rotation is greater than the predefined acceleration, the switch between items is performed. Additionally, in some embodiments, it is determined whether a rotation angle corresponding to the rotation is greater than a predefined angle. When the rotation angle is greater than the predefined angle, the switch between items is performed. If the motion does not indicate that the electronic device substantially rotates in a second direction around the specific axis (No in step S940), in step S960, a variation of a velocity and a displacement generated by the sensor, in a predefined interval in which the sensor detects the motion, is obtained, and it is determined whether the variation of the velocity and the displacement in the predefined interval conforms to a specific pattern. It is noted that, the specific pattern can be predefined in the electronic device. In some embodiments, a tolerance range can be also defined for the specific pattern. In other words, when the variation of the velocity and the displacement in the predefined interval does not exactly conform to a specific pattern, and the difference between the variation and the specific pattern falls into the tolerance range, it is determined the variation of the velocity and the displacement in the predefined interval conforms to a specific pattern. It is understood that, in some embodiments, the specific pattern indicates an arm-flinging behavior. If the variation of the velocity and the displacement in the predefined interval does not conform to a specific pattern (No in step S960), the procedure returns to step S910. If the variation of the velocity and the displacement in the predefined interval conforms to a specific pattern (Yes in step S960), in step S970, a switch from a first user interface to a second user interface is performed.

In some embodiments, the sensor may be a Gyro sensor for generating information of angular acceleration when the electronic device moves. In some embodiments, a variation of the angular acceleration generated in the predefined interval in which the sensor detects the motion is received. It is determined whether the variation of the angular acceleration, the velocity and the displacement in the predefined interval conforms to the specific pattern. When the variation of the angular acceleration, the velocity and the displacement in the predefined interval conforms to the specific pattern, a switch from a first user interface to a second user interface is performed.

Therefore, the operational methods and systems for motion-centric user interfaces of the present invention can operate user interfaces according to the motion of an electronic device, thereby providing more intuitive, convenient, and efficient user interfaces and the corresponding operational methods, and fulfilling the aspiration of most users.

Operational methods for motion-centric user interfaces may take the form of a program code (i.e., executable instructions) embodied in tangible media, such as floppy diskettes, CD-ROMS, hard drives, or any other machine-readable storage medium, wherein, when the program code is loaded into and executed by a machine, such as a computer, the machine thereby becomes an apparatus for executing the methods. The methods may also be embodied in the form of a program code transmitted over some transmission medium, such as electrical wiring or cabling, through fiber optics, or via any other form of transmission, wherein, when the program code is received and loaded into and executed by a machine, such as a computer, the machine becomes an apparatus for executing the disclosed methods. When implemented on a general-purpose processor, the program code combines with the processor to provide a unique apparatus that operates analogously to application specific logic circuits.

While the invention has been described by way of example and in terms of preferred embodiment, it is to be understood that the invention is not limited thereto. Those who are skilled in this technology can still make various alterations and modifications without departing from the scope and spirit of this invention. Therefore, the scope of the present invention shall be defined and protected by the following claims and their equivalent.

## Claims

1. An operational method for motion-centric user interfaces for use in an electronic device (PD), comprising:
providing at least one user interface (600);
detecting a motion of the electronic device (PD) by at least one sensor (110); and
when the motion indicates that the electronic device (PD) substantially rotates in a first direction (FRD) around a specific axis (SA), performing a switch from a first item (610) to a second item (620) in the user interface (600).

2. The method of claim 1, further comprising:
displaying the user interface (600) in a display unit of the electronic device (PD), wherein the user interface (600) comprises an indication (630); and
when the motion indicates that the electronic device (PD) substantially rotates in the first direction (FRD) around the specific axis (SA), moving the indication (630) from the position of the first item (610) to the position of the second item (620).

3. The method of claim 1, further comprising:
obtaining a variation of a velocity and a displacement generated in a predefined interval in which at least one sensor (110) detects the motion;
determining whether the variation of the velocity and the displacement in the predefined interval conforms to a specific pattern; and
when the variation of the velocity and the displacement in the predefined interval conforms to the specific pattern, performing a switch from a first user interface to a second user interface.

4. The method of claim 1, further comprising determining whether an acceleration for activating the rotation is greater than a predefined acceleration, and performing the switch from the first item (610) to the second item (620) in the user interface (600) when the acceleration for activating the rotation is greater than the predefined acceleration.

5. The method of claim 1, further comprising determining whether a rotation angle corresponding to the rotation is greater than a predefined angle, and performing the switch from the first item (610) to the second item (620) in the user interface (600) when the rotation angle is greater than the predefined angle.

6. An operational method for motion-centric user interfaces for use in an electronic device (PD), comprising:
providing a first user interface and a second user interface;
detecting a motion of the electronic device (PD) by at least one sensor (110);
obtaining a variation of a velocity and a displacement generated in a predefined interval in which at least one sensor (110) detects the motion;
determining whether the variation of the velocity and the displacement in the predefined interval conforms to a specific pattern; and
when the variation of the velocity and the displacement in the predefined interval conforms to the specific pattern, performing a switch from a first user interface to a second user interface.

7. An operational method for motion-centric user interfaces for use in an electronic device (PD), comprising:
providing at least one user interface (600);
detecting a motion of the electronic device by at least one sensor (110); and
when the motion indicates that the electronic device (PD) substantially rotates in a first direction (FRD) around a specific axis (SA), activating an application corresponding to the user interface (600).

8. An operational system for motion-centric user interfaces (100) for use in an electronic device (PD), comprising:
a storage unit (120) comprising at least one user interface (600);
at least one sensor (110) detecting a motion of the electronic device (PD); and
a processing unit (130) performing a switch from a first item (610) to a second item (620) in the user interface (600) when the motion indicates that the electronic device (PD) substantially rotates in a first direction (FRD) around a specific axis (SA).

9. An operational system for motion-centric user interfaces (100) for use in an electronic device (PD), comprising:
a storage unit (120) comprising a first user interface and a second user interface;
at least one sensor (110) detecting a motion of the electronic device (PD) by at least one sensor (110); and
a processing unit (130) obtaining a variation of a velocity and a displacement generated in a predefined interval in which at least one sensor (110) detects the motion, determining whether the variation of the velocity and the displacement in the predefined interval conforms to a specific pattern, and performing a switch from a first user interface to a second user interface when the variation of the velocity and the displacement in the predefined interval conforms to the specific pattern.

10. An operational system for motion-centric user interfaces (100) for use in an electronic device (PD), comprising:
a storage unit (120) comprising at least one user interface (600);
at least one sensor (110) detecting a motion of the electronic device (PD) by at least one sensor (110); and
a processing unit (130) activating an application corresponding to the user interface (600) when the motion indicates that the electronic device (PD) substantially rotates in a first direction (FRD) around a specific axis (SA).
